# EUROPÄISCHE PATENTANMELDUNG

(11) **EP 2 145 751 A1**
(43) Veröffentlichungstag der Anmeldung: **20.01.2010**
(21) Anmeldenummer: 08160697.2
(22) Anmeldetag: 18.07.2008
(51) Int. Cl.: B29C 70/44, B29C 33/52, B29C 43/12, B29C 70/22

(54) **Verfahren zur Herstellung eines Hohlkörpers aus Faserverbundkunststoff**

(71) Anmelder: Euro-Composites S.A., 6401 Echternach (LU)
(72) Erfinder: Bottler, Oliver, 54329 Konz (DE); Freres, Patrick, 9643 Buederscheid (LU)
(74) Vertreter: Office Freylinger

(57) **Zusammenfassung**

Die vorgeschlagene Herstellung eines Hohlkörpers aus Faserverbundkunststoff umfasst das Bereitstellen einer Preform-Anordnung in Form eines in Flechttechnik hergestellten Geflechts (12) von Verstärkungsfasern auf einem löslichen Kern (10). Der lösliche Kern (10) ist aus in Flüssigkeit dispergierbarem Formstoff hergestellt. Die Herstellung umfasst das Tränken der Verstärkungsfasern mit aushärtbarem Matrixmaterial im Resin-Infusion lnfusionsverfahren, d.h. das Matrixmaterial wird durch Einwirkung von Unterdruck in einen Raum eingesaugt, welcher ohne feste Formwerkzeuge durch eine Vakuumfolie (30) begrenzt wird. Nach An- bzw. Aushärten des Matrixmaterials wird der lösliche Kern durch Auflösen mit Flüssigkeit entfernt.

## Beschreibung

### Technisches Gebiet

Die vorliegende Erfindung betrifft allgemein die Verbundwerkstofftechnik und insbesondere ein Verfahren zur Herstellung von Hohlkörpern aus faserverstärktem Kunststoff.

### Stand der Technik

Ein Faserverbundwerkstoff ist bekanntermaßen ein Mehrphasen- oder Mischwerkstoff aus mindestens zwei Hauptkomponenten (bettende Matrix und verstärkende Fasern). Als bettende Matrix wir ein Harz aus der Gruppe der Duromere (auch Duroplaste, Kunstharze); der Elastomere oder der Thermoplaste verwendet. Als Faser kommen verschiedenartige Werkstoffe zum Einsatz (z.B. Kohlenstofffasern (auch Karbonfasern), Glasfasern, Aramidfasern, etc.).

Hohlkörper im Sinne der vorliegenden Erfindung sind Bauteile mit geschlossenem Umfang, d.h. umfänglich um die Längsachse geschlossene Bauteile welche einen Hohlraum definieren (wie z.B. Rohre, Walze, Wellen oder dgl.). Hohlkörper aus Faserverbundkunststoff (FVK), d.h. FVK-Bauteile, finden vielfältige Anwendungen in der Industrie. So werden rotationssymmetrische Rundkörper aus FVK bspw. als Leichtbau-Strukturelemente in der Flug- und Fahrzeugtechnik, als Behälter zur Stoffspeicherung oder als Rohre zum Stofftransport in der Versorgungstechnik, oder als Wellen oder Achsen im Maschinenbau eingesetzt. Auch Hohlbauteile aus FVK mit nicht abwickelbarer Geometrie finden vielfältigen Einsatz bspw. als Strukturhohlbauteile im Flugzeugoder Fahrzeugbau.

Zur Herstellung von Hohlkörpern aus FVK sind verschiedenartige Verfahren bekannt. Das Faserwickeln (Wickeltechnik) ist ein verbreitetes und weitestgehend automatisiertes Verfahren bei welchem Verstärkungsfasern über einen Positivkern gewickelt werden, wobei die Kerngeometrie den innenliegenden Hohlraum des Bauteils definiert (daher Positivkern). Hierbei können, je nach Kerngeometrie, wiederverwendbare Kerne, lösbare Kerne aus einem löslichen Medium oder verlorene Kerne welche im Bauteil verbleiben zum Einsatz kommen. In Wickeltechnik werden vorzugsweise Formteile wie Behälter, Rohre, Achsen und Wellen hergestellt (siehe Neitzel, Mitschang (Hrsg.) Handbuch Verbundwerkstoffe. München: Carl Hanser, 2004. - ISBN 3-446-22041-0 ). Beim automatisierten Duroplastwickeln werden von einer Spule kommende Rovings in einer Imprägnier- bzw. Tränkvorrichtung mit flüssigem Reaktionsharz imprägniert und anschließend mittels Fadenauge gelenkt auf den Kern gewickelt. Anschließend wird das so aufgewickelte Faser-Layup auf dem Kern in einem Ofen oder Autoklaven, i.A. unter anbleibender Drehung um die Bauteilachse, ausgehärtet. Beim Thermoplastwickeln hingegen werden vorimprägnierte Rovings mittels einer geeigneten Heizeinrichtung am Ablagepunkt auf den Kern aufgeschmolzen. Diese beiden Verfahrensarten der Wickeltechnik bringen jedoch einen verhältnismäßig hohen apparativen Aufwand mit sich, bspw. sind u.a. mit dem Fadenauge bewegliche und regelbare Tränkeinrichtungen bzw. punktgenaue Aufheizsysteme und entsprechend aufwendige Verfahrenssteuerungen notwendig.

Ein weiteres bekanntes, stark automatisiertes Direktverfahren ist das sog. Tapelegen (engl. Tape-Fibre-Placement), welches u.U. auch zur Herstellung von Hohlbauteilen geeignet ist. Im Gegensatz zum Wickelverfahren, welches Geometrien mit Hinterschneidung nur bei Rotationssymmetrie realisieren kann, lassen sich mit dem Tape-Legeverfahren auch komplexere, auch mehrfach gekrümmte (links- und rechtsgekrümmte) Geometrien vollautomatisiert herstellen. Beim Bandwickeln wird das Halbzeug konturgenau mittels Tape-Leger (Portalroboter) mit vollautomatisiertem Legekopf abgelegt. Auch beim Tapelegen können sowohl termoplastische wie auch mit Duroplastharz getränke Faserbändchen (Tape) verwendet werden, wobei Duroplastharze i.A. anschließend im Autoklaven ausgehärtet werden.

Die obengenannten Verfahren zeichnen sich durch ihren sehr hohen Automatisierungsgrad aus. Sie sind daher, insbesondere aber nicht ausschließlich durch die automatisierte Harztränkung und anschließende Autoklavaushärtung (bei Duroplasten) bzw. die automatisierte in-situ Konsolidierung (bei Thermoplasten) bedingt, mit hohem apparativem Aufwand und entsprechenden Investitionskosten verbunden. Die Anschaffung entsprechender Anlagen ist deshalb zumeist nur für Bauteilserien in großer Stückzahl ökonomisch vertretbar.

Ein weiteres Verfahren, bei dem insbesondere das Tränken der Fasern andersartig ausgeführt wird, ist beiläufig in der europäischen Patentanmeldung EP 1 745 908 beschrieben, welche einen wasserdispergierbaren Stützkern betrifft. Bei diesem Verfahren ist gegenüber den obengenannten bekannten Verfahren eine Verminderung der Investitionskosten zu erwarten. Im Verfahren gemäss EP 1 745 908 erfolgt das Tränken der Fasern auf einem wasserdispergierbaren Stützkern mit einem wärmehärtbaren Kunststoff, beispielsweise einem Expoxidharz, erst nachdem die Fasern bereits trocken auf den Kern aufgebracht sind. Das Aushärten des Kunststoffs kann hierbei nach dem RTM-Verfahren oder nach dem Vakuum-Injektions-Verfahren erfolgen. Mit anderen Worten, ein zuvor mit Verstärkungsfäden umwickelter, konfektionierter wasserdispergierbaren Stützkern gemäss EP 1 745 908 wird zunächst zwischen die beiden Werkzeuge, also beispielsweise das Ober- und das Unterwerkzeug, einer beheizten Presse gelegt. Anschließend werden die Verstärkungsfasern auf dem Stützkern mit dem wärmehärtbaren Kunststoff imprägniert, welcher in den Hohlraum zwischen den beiden Werkzeugteilen injiziert wird, in dem der Stützkern angeordnet ist. Dabei kann gemäss EP 1 745 908 beim RTM-Verfahren der wärmehärtbare Kunststoff unter einem Druck von 50 bar, insbesondere mehr als 80 bar oder gar 100 bar und mehr, in den Hohlraum gepresst werden, während beim Vakuum-Injektions-Verfahren der wärmehärtbare Kunststoff in den Hohlraum zwischen den beiden Formwerkzeuge mit dem darin angeordneten konfektionierten Stützkern vakuumunterstützt injiziert wird. Nach dem Aushärten des Harzes wird gemäss EP 1 745 908 entformt und der Stützkern mit Wasser ausgeschwemmt, so dass das faserverstärkte Strukturhohlbauteil gebildet wird.

### Aufgabe der Erfindung

Im Hinblick auf den obengenannten Stand der Technik liegt die Aufgabenstellung der vorliegenden Erfindung darin, ein kostengünstiges, insbesondere mit geringen Investitionskosten verbundenes, Verfahren zur Herstellung eines Hohlkörpers aus Faserverbundkunststoff vorzuschlagen.

Diese Aufgabe wird durch ein Verfahren nach Anspruch 1 gelöst.

### Allgemeine Beschreibung der Erfindung

Das Verfahren zur Herstellung eines Hohlkörpers aus Faserverbundkunststoff nach Anspruch 1 umfasst folgende Schritte:
- Bereitstellen einer Preform-Anordnung in Form eines Geflechts, vorzugsweise eines Rundgeflechts, von trockenen Verstärkungsfasern auf einem löslichen, in Flüssigkeit dispergierbaren Kern;
- Tränken der Verstärkungsfasern mit flüssigem, aushärtbarem Matrixmaterial im Infusionsverfahren nach dem Vakuumsack-Prinzip, wobei das Matrixmaterial durch Einwirkung von Unterdruck in eine die Preform-Anordnung technisch vakuumdicht umschließende Vakuumfolie eingesaugt wird;
- An- bzw. Aushärten des Matrixmaterials; und
- Entfernen des löslichen Kerns durch Auflösen mittels Flüssigkeit.

Das Harzinfusionsverfahren (Resin-Infusion) ist, insbesondere im Vergleich zum RTM-Harzinjektions-Verfahren mit festen, dicht verschließbaren Negativformhälften, ein kostengünstiges Verfahren mit geringerem Automatisierungsgrad. Zudem ist beim vorliegend vorgeschlagenen RI-Verfahren zu beachten, dass insgesamt keine Negativformteile nötig sind (auch keine einteilige Unterlageform), da die Formgebung integral durch den innenliegenden Positivkern wahrgenommen wird. Das RI-Verfahren nach dem Vakuumsack-Prinzip ermöglicht zudem schnelle und kostengünstige Änderungen der Bauteilgeometrie, da hierfür lediglich die Form des Kerns geändert werden muss. Es stellt jedoch, aufgrund des fehlenden Injektionsüberdrucks, höhere Anforderungen an die Tränkbarkeit der Faseranordnung.

Im Gegensatz zu anderen Herstellungsmöglichkeiten von Faseranordnungen auf einem Stützkern (bspw. ein durch reines Wickeln erzeugtes, orientiertes Faserpaket) hat sich herausgestellt, dass die Verwendung eines geeignet gewählten Fasergeflechts für eine prozesssichere Anwendung des Vakuum-Infusionsverfahrens geeignet ist, wenngleich die Flechttechnik i.A. geringere Faservolumendichten bedingt. Durch die Erzeugung von Faserumlenkungen im Geflecht entstehen inhärent Fließkanäle für das Harz im Infusionsprozess. Das Vorhandensein von Fließkanälen ist für eine Vakuuminfusion eine entscheidende Voraussetzung um das Faserpaket, welches erschwerend durch Vakuum kompaktiert ist, ausreichend und homogen mit Harz zu durchtränken. Im Vergleich hierzu lassen sich gewickelte oder mittels Tape-Fibre-Placement hergestellte Faserpakete, die aus einer dichten Stapelung von rein unidirektional abgelegten Fasern bestehen, aufgrund fehlender Freivoluminas oder Hohlräume im Faserpaket, insbesondere im vakuumkompaktierten Zustand, nicht oder nur unzureichend homogen durchtränken.

Im Vergleich zur bekannten Wickeltechnick mit vorimprängierter Faser, hat das Ablegen von Trockenfasern durch Flechten ferner den Vorteil, dass der Anlage kein Imprägnierbad zugeordnet werden muss, und eine entsprechende Regelung der Imprägnierung der Faser mit Reaktionsharz in Funktion der variablen Wickelgeschwindigkeit (z.B. bei Querschnittsverjüngung des Kerns) entfällt. Die Verwendung eines löslichen Positivkerns zur Formgebung ermöglicht als Einwegprodukt zusätzliche Einsparungen. Im Vergleich zu RTM-Formhälften und zu wiederverwendbaren Kernen ist keine aufwendige Reinigung erforderlich. Zudem entfällt gegenüber dem RTM-Verfahren mit dem vorgeschlagenen Verfahren der Aufwand zur ortsfesten Positionierung des Kerns innerhalb der schließbaren RTM-Formhälften.

Bevorzugte Ausführungsformen des erfindungsgemäßen Verfahrens ergeben sich aus den Unteransprüchen 2-15. Weitere Einzelheiten und Vorteile der Erfindung können der nachfolgenden ausführlicheren Beschreibung möglicher Ausführungsformen der Erfindung entnommen werden.

### Kurze Beschreibung der Figuren

Im Folgenden wird nun eine bevorzugte Ausgestaltung der Erfindung anhand der beiliegenden Figur näher beschrieben.

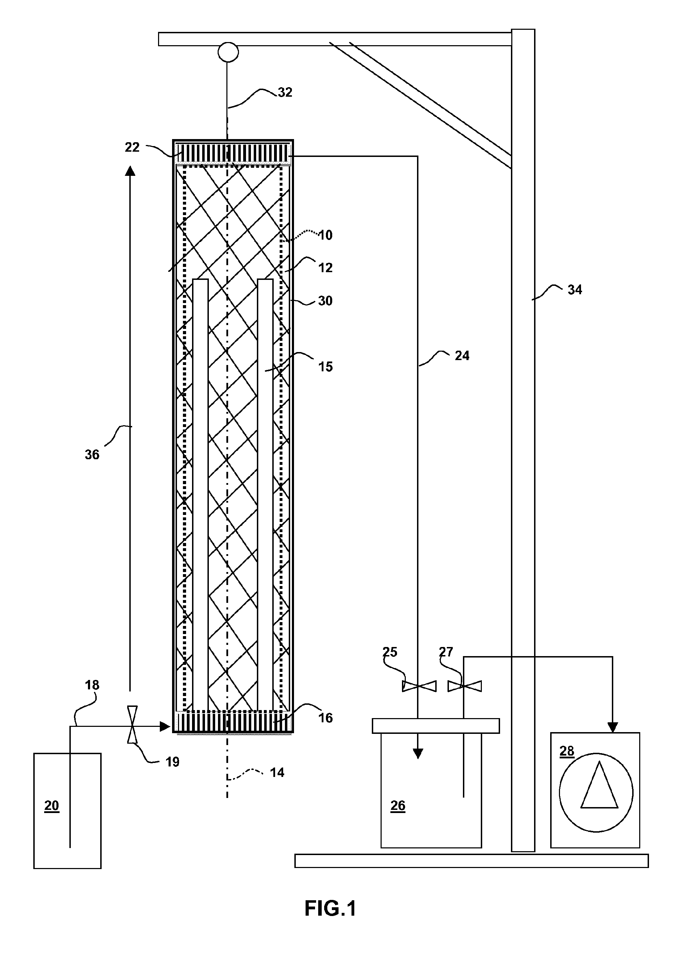

Fig. 1 zeigt eine schematische Darstellung eines Verfahrensaufbaus zur Ausführung des erfindungsgemäßen Verfahrens.

### Beschreibung einer bevorzugten Ausgestaltung der Erfindung

Der schematisch zur Illustration der Erfindung in FIG.1 dargestellte Verfahrensaufbau umfasst einen löslichen Positivkern 10 (punktiert dargestellt). Der lösliche Positivkern 10 definiert die Innenkontur (d.h. die Form der Innenoberfläche) des herzustellenden FVK-Hohlkörpers und besitzt eine entsprechend konjugierte Außenoberfläche welche Bauteilabhängig ist. Zur Herstellung eines FVK-Walzenrohres bspw. hat der Positivkern 10 eine einfache kreiszylindrische Außenoberfläche. Komplexere Geometrien mit Krümmungen und/oder Durchmesseränderungen im Bauteil sind jedoch ebenfalls möglich, bspw. nicht abwickelbare und/oder mehrfach gekrümmte und/oder hinterschnittene d.h. nicht rein konvexe Oberflächen des Positivkerns 10.

Der Positivkern 10 ist auf Basis eines in Flüssigkeit dispergierbaren d.h. auflösbaren Formstoffs hergestellt. Der Positivkern 10 besteht daher im wesentlichen aus in Flüssigkeit dispergierbarem, verdichtetem und ausgehärtetem Formstoff welcher Sand, insbesondere Quarzsand als Füllstoff und ein wasserlösliches Bindemittel, bspw. ein organisches Bindemittel wie Stärke, umfasst. Die Herstellung derartiger flüssigkeitslöslicher Stützkerne ist an sich bekannt und wird daher hier nicht näher erläutert. Beispielhaft sei auf die Patentdokumente EP 1 745 908, DE 195 34 836 oder US 5 262 100, verwiesen, welche die Herstellung solcher Kerne erläutern. Aufgrund der erfindungsgemäßen Verwendung eines RI Verfahrens ohne Überdruck (siehe weiter unten) ist jedoch anzumerken, dass, die Druckfestigkeit des Positivkerns 10 verhältnismäßig gering ausgelegt sein kann, bspw. im Bereich von 2-10bar, so dass eine kostengünstigere Herstellung und Materialwahl vom löslichen Positivkern 10 ermöglicht wird.

Der lösliche Positivkern 10 ist außenumfänglich mit einer nicht näher gezeigten für das im Verfahren verwendete Matrixmaterial undurchlässigen und vorzugsweise technisch vakuumdichten Dichtfolie dicht verschlossen, bspw. mittels einer für die benötigte Aushärtetemperatur (s. weiter unten) geeigneten Thermoplastfolie.

Auf den löslichen Positivkern 10 ist ein Fasergeflecht 12 aufgeflochten. Das Fasergeflecht 12 ist in geeigneter an sich bekannter Flechttechnik, vorzugsweise in Rundflechttechnik wie Radialflechttechnik oder in 3D-Rotationsflechttechnik, hergestellt. Beispielhaft sei auf die Patentanmeldung WO2004/057082 verwiesen, welche eine Vorrichtung zum Beflechten eines Kerns offenbart. Die bei der Herstellung des Fasergeflechts 12 anzuwendenden Prozessparameter wie Flechtwinkel, Flechtfadenspannung, Anzahl Flechtfäden, etc., sind hierbei gemäss der bestimmungsgemäßen Anwendung des FVK-Hohlkörpers vorbestimmt, u.a. so dass die Faserorientierungen den zu erwartenden Belastungen des FVK-Hohlkörpers angepasst sind. Der Flechtwinkel (Winkel der Faden zur Bauteillängsrichtung) im Fasergeflecht 12 beträgt allgemein zwischen 10° und 70°. Zur Verbesserung mechanischer Eigenschaften können jedoch Stehfäden, insbesondere 0° Stehfäden, eingeflochten sein.

Das Fasergeflecht 12 bildet die eigentlichen Verstärkungsfasern (z.B. aus Glas- und/oder Carbonfasern) des herzustellenden FVK-Hohlkörpers. Das Fasergeflecht 12 besteht aus trockenen (d.h. nicht mit eigentlichem Matrixmatrial vorgetränkten) FVK-Verstärkungsfasern. Die Fasern aus denen das Fasergeflecht 12 hergestellt ist, können jedoch gegebenenfalls mit Prozesshilfsmitteln (bspw. Binder zur Formgebung) versehen sein. Das Fasergeflecht 12 besteht aus übereinander geschichteten Flechtlagen (einzelne Schichten aus Geflecht) und umgibt als Rundgeflecht den Positivkern 10 vollumfänglich in Umfangsrichtung bezüglich der Längsachse 14 des FVK-Hohlkörpers bzw. des Positivkerns 10. Die Flechtfäden im Fasergeflecht 12, d.h. die Verstärkungsfäden im herzustellenden FVK-Bauteil bestehen aus Endlos-Faserrovingen (auch als Filamentgarne bezeichnet), bspw. aus Glasfasern, Carbon-Fasern, Borfasern, Aramid-Fasern, Keramik-Fasern, Metall-Fasern, Naturfasern oder aus einer Kombination von mindestens zwei der vorgenannten Fasertypen. Ist eine anschließende Weiterbearbeitung durch spanabhebendes Bearbeiten der Oberfläche des Hohlkörpers vorgesehen, werden vorzugsweise eine oder mehrere äußere Flechtlagen des Fasergeflechts 12 mit bezüglich der inneren Lagen aus günstigerem und/oder leichter verarbeitbarem Fasermaterial vorgesehen. Alternativ oder in Ergänzung kann zumindest eine äußere Flechtlage eine Faserorientierung mit größerem Flechtwinkel aufweisen, so dass eine geringere Menge an Fasermaterial bei der Nachbearbeitung geopfert wird und/oder hierdurch eine höhere Oberflächengüte durch Nachbearbeitung erzielt werden kann.

Zur Erzeugung von Fließkanälen in der den Positivkern 10 umgebenden Faseranordnung weisen für sich betrachtete, einzelne Flechtlagen im Fasergeflecht 12 jeweils gleichläufige und gegenläufige Flechtfäden mit annähernd gleicher Biegesteifigkeit (Elastizitätsmodul bei Biegung oder Biegemodul) auf. Hierdurch werden in der Flechtlage freie Zwischenräumen an den Fadenüberkreuzungen im Fasergeflecht 12 durch die Umlenkungen der Flechtfäden d.h. durch Welligkeit der Flechtfäden erzeugt. Dies steht im Gegensatz zu ungekreuzt im reinen Wickelverfahren aufgebrachten unidirektionalen (UD) Faseranordnungen aber auch im Gegensatz dem aus der Patentanmeldung WO2005/098117 bekannten Rundflechtverfahren für Faserverbund-Halbzeuge, welches zur Erhöhung der Faservolumendichte auf die Vermeidung eben solcher freier Zwischenräume abzielt. Beim vorliegenden Verfahren werden hingegen in jeder Geflechtlage des Fasergeflechts 12 gleichläufige und gegenläufige Flechtfäden aus vorzugsweise identischem Fasermaterial verwendet, wobei Variationen im Fasermaterial zwischen den verschiedenen Flechtlagen jedoch nicht ausgeschlossen sind.

Durch die im vorliegenden Verfahren gezielt im Fasergeflecht 12 erzeugten Freiräume entstehen im Fasergeflecht 12 inhärente ,,Fliesskanäle" zur verbesserten und gleichlässigeren Durchtränkung mit Matrixmaterial bei der anschließenden Harzimprägnierung im RI-Verfahren. Der mittlere Abstand zwischen parallelen gleichläufigen Flechtfäden und/oder parallelen gegenläufigen Flechtfäden innerhalb zumindest einer einzelnen Geflechtlage des Fasergeflecht 12 liegt vorzugsweise im Bereich von 2-20% des Flechtfadenquerschnitts (bei Flechten von einzelnen Fasern als Flechtfäden) bzw. der Rovingbreite (bei Flechten von Rovings) so dass ein Mindestvolumen der freien Zwischenräume für die Harzimprägnierung im RI-Verfahren sichergestellt ist, ohne dass die Faservolumendichte im herzustellenden Hohlkörper zu stark reduziert wird.

Das aufgeflochtene Fasergeflecht 12 und der vom Fasergeflecht 12 in Umfangsrichtung umschlossene, abgedichtete, lösbare Positivkern 10 bilden zusammen eine sog. Preform-Anordnung. Um die wie oben beschrieben bereitgestellte Preform-Anordnung wird eine geeignete harzdurchlässige Trennschicht, wie bspw. ein an sich bekannter perforierter Trennfilm (nicht näher gezeigt) angebracht. Ebenfalls geeignet als harzdurchlässige Trennschicht ist z.B. ein Abreißgewebe. Anschließend wird auf den harzdurchlässigen Trennfilm ein geeignetes, an sich bekanntes Harzverteilermedium 15 (schematisch gezeigt) abgelegt zur Unterstützung der anschließenden Tränkung vom Fasergeflecht 12 mit Harz. Zur zusätzlichen Verbesserung des Harzfließverhaltens innerhalb des Verfahrensaufbaus können zusätzliche Harzverteilerstreifen auf das abgelegte Harzverteilermedium angebracht werden oder das Harzverteilermedium kann in mehrfachen Lagen bspw. doppelt abgelegt werden.

Zur Verbesserung der Oberflächenqualität bzw. Oberflächengüte in Bezug auf Unebenheit und zur Verbesserung der Gleichmäßigkeit der Wandstärke im herzustellenden FVK-Hohlkörper ist die Verwendung einer semi-flexiblen Bauteilumspannung als Formgebungshilfe (nicht gezeigt) vorteilhaft. Eine solche Formgebungshilfe ist zwischen harzdurchlässigem Trennfilm und Harzverteilermedium bzw. Fliesshilfe vorzusehen, d.h. unmittelbar auf den Trennfilm anzubringen. Die Formgebungshilfe kann z.B. in Form zweier Lochblechschalen die sich unter Vakuum ineinander verzahnen können vorgesehen werden. Auch ein gelochter Silikonmantel oder Schlauch aus geeignetem Material ist anwendbar. Die Formgebungshilfe wird mit geeigneter Spannkraft um die Preform-Anordnung aufgespannt und ist in jedem Fall formgebend jedoch gasdurchlässig auszugestalten. Ferner kann durch das Anbringen einer Matrixmaterialsperre, in Form einer semi-permeablen Membran (bspw. sog. VAP-Membran) innenseitig an der Formgebungshilfe, ein anschließendes Reinigen der Formgebungshilfe vom Matrixmaterial vermieden werden. Die Formgebungshilfe bleibt als Umspannung während der anschließenden Harzinfusion als Mantel um das Bauteil erhalten und wird erst nach Aushärtung des Harzes vom Bauteil entfernt.

Wie anhand des schematischen Aufbaus in FIG.1 gezeigt, wird zur gleichmäßigen Zufuhr von Harz, insbesondere in Umfangsrichtung, am unteren Ende der Preform-Anordnung ein Spiralschlauch 16 als Zuleitung vorgesehen. Der Spiralschlauch 16 ist an eine Harzzuleitung 18 angeschlossen in welcher eine Harzzufuhrsperrvorrichtung 19 vorgesehen ist, bspw. in Form einer Klemmzange oder eines Absperrhahns. Die Harzzuleitung 18 ist mit einem Harzbehälter 20 verbunden, welcher flüssiges, niedrigviskoses Harz bevorratet, vorzugsweise ein Harz mit einer Infusionsviskosität ≤ 600 mPas. Ein weiterer Spiralschlauch 22 ist zur umfänglich gleichmäßigen Ableitung des Harzes am gegenüberliegenden, oberen Ende der Preform-Anordnung vorgesehen. Der Spiralschlauch 22 ist an eine Vakuumleitung 24, bspw. ein Vakuumschlauch, mit einer Harzabfuhrsperrvorrichtung 25, bspw. in Form einer Klemmzange oder eines Absperrhahns, angeschlossen. Die Vakuumleitung 24 führt in eine Harzfalle 26, welche gasdicht über eine Vakuumleitung, in welcher eine Vakuumsperrvorrichtung 27 vorgesehen ist, mit einer Vakuumpumpe 28 verbunden ist, und letztere vor überschüssigem Harz schützt.

Die oben beschriebene Anordnung bestehend aus Preform-Anordnung, d.h. abgedichteter Positivkern 10 mit umgebendem Fasergeflecht 12, Trennfilm, ggf. Formgebungshilfe, Harzverteilermedium bzw. Fliesshilfe und an beiden Stirnenden vorgesehene Spiralschläuche 16, 22 wird abschließend mit einem Vakuumsack 30 aus flexibler, schmiegsamer und technisch gasdichter Vakuumfolie eingeschlossen. Der Vakuumsack 30 ist für das Beaufschlagen Preform-Anordnung mit Unterdruck zur Ausführung des RI-Verfahrens erforderlich, besitzt an sich jedoch keine formgebende Funktion. Durch das verwendete Vakuuminfusionsverfahren wirkt die umgebende Atmosphäre, welche der Stützwirkung des Positivkerns 12 entgegenwirkt und so das Fasergeflecht auf den Positivkern 12 presst, wie eine Negativform. Die Außenkontur bzw. Außenoberfläche wird ausschließlich durch die Oberfläche des Positivkerns 10 zusammen mit der Beschaffenheit (insbesondere Dicke) des Fasergeflechts 12 bestimmt. Kostspielige Negativformschalen aus Metall, wie für die Presse im RTM-Verfahren verwendet, sind somit beim vorliegenden Verfahren nicht erforderlich.

Wie aus FIG.1 ersichtlich, ist an einem Stirnende der Preform-Anordnung eine Aufhängevorrichtung 32 vorgesehen, bspw. in Form eines geeigneten Hakens welcher in den Positivkern 10 eingeschraubt ist. Zur Abdichtung der Durchtrittstelle von Harzzuleitung 18, Vakuumleitung 24 und Aufhängevorrichtung 32 und zum dichten verschließen des Vakuumsacks 30 wird geeignetes Vakuumdichtband verwendet. Anhand der Aufhängevorrichtung 32 wird die mit Vakuumsacks 30 gasdicht eingeschlossene und vorzugsweise bereits mit Unterdruck beaufschlagte Anordnung an einem Galgen 34 vertikal aufgehängt, d.h. so dass die Längsachse 14 vertikal ausgerichtet ist.

Anschließend an den materiellen Verfahrensaufbau wird in Folge der Verfahrensablauf näher erläutert. Die wie oben beschreiben bereitgestellte Preform-Anordnung wird erfindungsgemäß im Vakuumsack 30 einem Harzinfusionsverfahren (RI) unterzogen. Hierzu wird zunächst der im Vakuumsack 30 verschlossene Aufbau mit technischem Vakuum beaufschlagt indem die Vakuumpumpe 28 eingeschaltet wird und die Sperrvorrichtungen 25, 27 geöffnet werden. Wenn ein vorbestimmter Unterdruck ≤ 20mbar (abs), bspw. <0,5mbar (abs), erreicht ist, wird der Aufbau mittels Aufhängevorrichtung 32 and dem Galgen 34 senkrecht aufgehängt.

Anschließend wird der Harzinfusionsvorgang durch Öffnen der Harzzufuhrsperrvorrichtung 19 eingeleitet. Hierbei ist zu beachten, dass beim Tränken der Verstärkungsfasern mit Matrixmaterial das Matrixmaterial von unten nach oben, d.h. in einer Harzinfusionsrichtung 36 entgegengesetzt zur Schwerkraft in den Infusionsraum d.h. den zwischen abgedichtetem Positivkern 10 und Vakuumsack harzdicht eingeschlossen Raum eingesaugt wird. Durch den entsprechenden Verlauf der Harzfronten wird eine gleichmäßige Harzverteilung sowohl in axialer, umfänglicher wie auch in radialer Richtung sichergestellt indem lokale Harzansammlungen vermieden werden. Als Matrixmaterial geeignet ist ein Kunststoffharz aus der Gruppe der Duroplaste, insbesondere ein Epoxydharz, Cyanuratharz, Cyanatesterharz, Polyesterharz, Phenolharz, Vinylesterharz, Acrylharz, oder Silan oder ein Harzgemisch aus mindestens zwei der vorgenannten Harze.

Nachdem eine vollständige Durchtränkung des Fasergeflechts 12 überprüft (z.B. visuell) ist, wird die Harzzufuhr abgestellt, d.h. die Harzzufuhrsperrvorrichtung 19 wird geschlossen. Die mit Matrixmaterial durchtränkte Preform-Anordnung wird während der gesamten anschließenden Aushärtungsphase mit Vakuum beaufschlagt (≤ 20mbar (abs) bspw. <0.5mbar (abs)). Die An- bzw. Aushärtung (Vortempern) kann je nach verwendetem Matrixmaterial bei Raumtemperatur oder bei höheren Temperatur, bspw. in einem beheizten Raum oder durch geeignete Heizmittel, ausgeführt werden.

Nach Härtung des Matrixmaterials bzw. Harzes wird das Vakuum abgestellt. Der Vakuumsack 30, die Harzverteilermittel 15, die ggf. verwendete Formgebungshilfe und der Trennfilm (letzterer erleichtert das Abtrennen) werden anschließend entfernt, so dass nur noch der überschüssige Positivkern 10 im hergestellten, ausgehärteten Hohlkörper aus Faserverbundkunststoff verbleibt.

Zum Entfernen des Positivkern 10 wird dieser mit Wasser aus dem Inneren des FVK- Hohlkörpers herausgelöst, bspw. mittels eines Schlauches (fließendes Wasser) oder durch Eintauchen in Wasser (stehendes Wasser).

Nach Reinigung, Trocknung und ggf. notwendiger anschließender Nachhärtung (Nachtempern bzw. "post-curing" bspw im Ofen) ist der Faserverbundhohlkörper fertiggestellt als Zwischenprodukt zur Weiterverarbeitung (z.B. Abdrehen zu einem Walzenrohr) bzw. Fertigprodukt (z.B. als Leitungsrohr) zur Anwendung.

Mit dem oben beschriebeneren Verfahren lassen sich Zwischen- oder Endprodukte für diverse Anwendungen herstellen. Rein beispielhaft seien anschließend einige bevorzugte Beispiele zur Wahl verschiedener Materialien und Prozessparameter angegeben:
- Positivkern:
   ○ mit Binder dispergierter und gehärteter Kern auf Basis von Quarzsand;
- Fasergeflecht:
   ○ 11 Lagen mit Flechtwinkel: ± 15°; 90°;± 15°; ± 15°;90°; ± 15°; oder
   ○ 11 Lagen mit Flechtwinkel:: ± 75°; 90°; ± 15°; ± 15°; 90°; ± 75°; oder
   ○ 12 Lagen mit Flechtwinkel:: ± 15°; 90°; 0°; ±15°; ± 15°; 0°; 90°; ± 15°; oder
   ○ 11 Lagen mit Flechtwinkel:: ± 15°; ± 15°; 90°, 0°; 90° ± 15°; ± 15°; oder
   ○ 12 Lagen mit Flechtwinkel: 0°; 90°; 0°; ± 45°; 90°; 90°; ± 45°; 0°; 90°; 0°.
- Fasern:
   ○ HT Carbonfaser 24 K; oder
   ○ HT Carbonfaser 12 K; oder
   ○ HT Carbonfaser 6K;
   alle erhältlich bspw. von Toray carbon fibers America, Inc. (Decatur, AL 35602, USA), von Toho Tenax europe GmbH (Wuppertal, D-42103, Deutschland), oder von Mitsubishi Chemical Corp. (Tokyo 108-0014, Japan)
- Matrixmaterial:
   ○ 2 Komponenten Epoxidharze:
      ■ Larit L285 mit Härter H287 (erhältlich von Lange+Ritter GmbH, Gerlingen; D-70839, Deutschland); oder
      ■ RenLam RY113 mit Härter HY98 (erhältlich von Bodo Möller Chemie GmbH, Offenbach/Main, D-63069, Deutschland); oder
      ■ Epikote RIM 935 mit Härter RIM H937(erhältlich von Hexion Specialty Chemicals B.V., Rotterdam, NL-3194 DH Hoogvliet; Niederlande) oder
      ■ Toolfusion 1A mit Härter Toolfusion 1B (erhältlich von Airtech Europe S.A., L-4562 Differdange, Luxemburg)
   ○ 1 Komponenten-Harz:
      ■ EC-RI-FST (erhältlich von EURO-COMPOSITES S.A., L-6401 Echternach, Luxemburg); oder
      ■ Epsilon 99100 (erhältlich von Henkel Corp. Aerospace Group, Bay Point, CA 94565, USA)
- RI-Prozessparameter:
   ○ Harzinfusion: bei Raumtemperatur
   ○ Vakuum: <1mbar (abs)
   ○ Vortempern bei 50°C (unter Vakuum) zwischen 2-6 Stunden je nach verwendetem Harztyp, anschließendes Lösen des Bauteils aus dem Aufbau;
   ○ Nachtempern (post curing) des Bauteils, je nach Harztyp, stufenweise 1-2 h in 20°C Temperierstufen, bis zu 180°C

Abschließend seien einige Vorteile des vorgeschlagenen Verfahrens aufgezeigt:
- es sind nahezu keine Investitionen in Anlageninfrastruktur notwendig;
- es handelt sich um ein geschlossenes Verfahren, d.h. das Verfahren ist physiologisch günstig für Arbeitsbereich und Personal;
- es ist nahezu jede 3D- Hohlkörpergeometrie herstellbar (die Geometrie wird lediglich durch die verwendete Flechttechnik eingeschränkt);
- theoretisch ist keine Beschränkung der Bauteillänge sondern allenfalls des Bauteildurchmessers gegeben (z.B. durch die verwendete Flechtmaschine).
- es sind hohe Faservolumengehalte erzielbar, wodurch ein geringes Bauteilgewicht erreichbar ist;
- durch die Infusionstechnik mit Vakuumsack (im Gegensatz zur druckbeaufschlagten Harzinjektion) wird ein größeres Spektrum an Harzsystemen verwendbar wodurch weitere Verbesserung der Materialeigenschaften erzielt werden können.

### Bezugszeichenliste:

| | |
|---|---|
| 10 löslicher Positivkern | 24 Vakuumleitung |
| 12 Fasergeflecht | 25 Harzabfuhrsperrvorrichtung |
| 14 Längsachse | 26 Harzfalle |
| 15 Harzverteilermedium | 27 Vakuumsperrvorrichtung |
| 16 Spiralschlauch | 28 Vakuumpumpe |
| 18 Harzzuleitung | 30 Vakuumsack |
| 19 Harzzufuhrsperrvorrichtung | 32 Aufhängevorrichtung |
| 20 Harzbehälter | 34 Galgen |
| 22 Spiralschlauch | 36 Harzinfusionsrichtung |

## Patentansprüche

1. Verfahren zur Herstellung eines Hohlkörpers aus Faserverbundkunststoff umfassend:
Bereitstellen einer Preform-Anordnung in Form eines Geflechts von Verstärkungsfasern auf einem löslichen Kern, wobei der lösliche Kern auf Basis von einem in Flüssigkeit dispergierbaren Formstoff hergestellt ist;
Tränken der Verstärkungsfasern mit aushärtbarem Matrixmaterial im Infusionsverfahren, wobei das Matrixmaterial durch Einwirkung von Unterdruck in einen Infusionsraum eingesaugt wird, welcher durch eine die Preform-Anordnung umschließende Vakuumfolie begrenzt wird;
An- bzw. Aushärten des Matrixmaterials; und
Entfernen des löslichen Kerns durch Auflösen mittels Flüssigkeit.

2. Verfahren nach Anspruch 1, wobei die Preform-Anordnung eine Längsachse aufweist welche beim Tränken der Verstärkungsfasern mit Matrixmaterial im Infusionsverfahren vertikal ausgerichtet ist und wobei das Matrixmaterial vorzugsweise in Richtung entgegengesetzt zur Schwerkraft in den Infusionsraum eingesaugt wird.

3. Verfahren nach Anspruch 1 oder 2, umfassend das Rundflechten eines Geflechts aus Verstärkungsfasern um den löslichen Kern, vorzugsweise in Radialflechttechnik oder in 3D-Rotationsflechttechnik.

4. Verfahren nach Anspruch 1, 2 oder 3, wobei in einer Flechtlage des Geflechts jeweils gleichläufige und gegenläufige Flechtfäden annähernd gleiche Biegesteifigkeit aufweisen und vorzugsweise aus identischem Fasermaterial bestehen.

5. Verfahren nach einem der Ansprüche 1 bis 4, wobei ein niedrigviskoses Matrixmaterial mit einer Viskosität ≤ 600 mPas eingesaugt wird..

6. Verfahren nach einem der Ansprüche 1 bis 5, umfassend das Flechten von mehreren aufeinander angeordneten Flechtlagen von Verstärkungsfasern auf dem löslichen Kern wobei eine oder mehrere äußere Flechtlagen bezüglich der inneren Lagen aus unterschiedlichem Fasermaterial bestehen und/oder wobei zumindest eine äußere Flechtlage eine Faserorientierung mit bezüglich der inneren Flechtlagen größerem Flechtwinkel aufweist.

7. Verfahren nach einem der voranstehenden Ansprüche, umfassend das Umspannen der Preform-Anordnung mit einer semiflexiblen, gasdurchlässigen, vorzugsweise Matrixmaterial undurchlässigen Formgebungshilfe zur Verbesserung der Oberflächengüte des fertiggestellten Hohlkörpers.

8. Verfahren nach einem der voranstehenden Ansprüche, wobei die Preform-Anordnung trockene, ungetränkte gegebenenfalls hilfsmittelbehaftete Verstärkungsfasern umfasst, welche den löslichen Kern in Umfangsrichtung umschließen.

9. Verfahren nach einem der voranstehenden Ansprüche, wobei der lösliche Kern aus in Flüssigkeit dispergierbarem Formstoff besteht, insbesondere aus einem Formstoff welcher einen Füllstoff, insbesondere Quarzsand, und ein wasserlösliches Bindemittel umfasst.

10. Verfahren nach einem der voranstehenden Ansprüche, wobei das Matrixmaterial durch Einwirkung von Vakuum <20 mbar in den Infusionsraum eingesaugt wird und wobei vorzugsweise das An- bzw. Aushärten des Matrixmaterials unter diesem Vakuum <20 mbar und gegebenenfalls unter Wärmezufuhr ausgeführt wird.

11. Verfahren nach einem der voranstehenden Ansprüche, wobei der Kern zunächst mittels einer bezüglich Matrixmaterial dichten Dichtfolie umgeben wird bevor die Verstärkungsfasern um den löslichen Kern geflechtet werden.

12. Verfahren nach einem der voranstehenden Ansprüche, wobei als Matrixmaterial ein Kunststoffharz aus der Gruppe der Duroplaste verwendet wird, insbesondere ein Epoxydharz, Cyanuratharz, Cyanatesterharz, Polyesterharz, Phenolharz, Vinylesterharz, Acrylharz, oder Silan oder ein Harzgemisch aus mindestens zwei der vorgenannten Harze.

13. Verfahren nach einem der voranstehenden Ansprüche, wobei als Verstärkungsfasern Glasfasern, Carbon-Fasern, Borfasern, Aramid-Fasern, Keramik-Fasern, Metall-Fasern, Naturfasern oder eine Kombination von mindestens zwei der vorgenannten Fasertypen verwendet werden, vorzugsweise in Form von Endlosrovings.

14. Verfahren nach einem der voranstehenden Ansprüche, umfassend:
Umgeben der Preform-Anordnung aus Verstärkungsfasern und löslichem Kern mit einer harzdurchlässigen Trennschicht;
Anbringen eines Harzverteilermediums und/oder einer Fliesshilfe auf der Trennschicht bzw. bei Umspannen der mit Trennschicht umgebener Preform-Anordnung mittels einer Formgebungshilfe, Anbringen eines Harzverteilermediums und/oder einer Fliesshilfe auf der Formgebungshilfe;
Einschließen des Aufbaus umfassend zumindest die Preform-Anordnung, die Trennschicht, gegebenenfalls die Formgebungshilfe und das Harzverteilermedium und/oder die Fliesshilfe in einem Vakuumsack; und anschließend
Tränken der Verstärkungsfasern mit aushärtbarem Matrixmaterial.

15. Verfahren gemäss einem der voranstehenden Ansprüche zur Herstellung eines hohlzylindrischen Walzenrohres aus Faserverbundkunststoff.
